# EUROPEAN PATENT APPLICATION

(11) **EP 4 825 927 A1**
(43) Date of publication of application: **21.10.2026**
(21) Application number: 24904400.9
(22) Date of filing: 12.12.2024
(51) Int. Cl.: C09D 7/61, C09D 133/00, C09D 163/00, C09D 175/04, C09D 201/04, C08K 3/04, B05D 7/14

(54) **GRAPHENE-COATED STEEL SHEET**

(30) Priority: 15.12.2023 KR 20230183367
(71) Applicant: POSCO Co., Ltd, Gyeongsangbuk-do 37859 (KR)
(72) Inventor: YOO, Hye-Jin, Gwangyang-si, Jeollanam-do 57807 (KR); JUNG, Jin-Ho, Gwangyang-si, Jeollanam-do 57807 (KR)
(74) Representative: Meissner Bolte Partnerschaft mbB
(86) International application number: PCT/KR2024/096825
(87) International publication number: WO 2025/127835

(57) **Abstract**

A graphene-coated steel sheet according to an embodiment comprises: a plated steel sheet; and a graphene coating layer disposed on the plated steel sheet and containing graphene, wherein the graphene is contained in a content of 0.1 to 30 wt% relative to the total weight of the graphene coating layer, and the average distribution area fraction of graphene particles per unit area (0.1 mm X 0.1 mm) of the graphene coating layer may be 10 or more.

## Description

### Technical Field

The present disclosure relates to a graphene-coated steel sheet.

### Background Art

Graphene is a material having a two-dimensional (2D) lattice structure with a thickness of a single atomic layer, in which carbon atoms are arranged in a specific pattern, and has a planar structure in which carbon atoms are connected in a hexagonal form.

Graphene has a tensile strength 311 times greater than that of steel, an electron mobility 1,000 times higher than that of silicon, and a thermal conductivity more than 10 times higher than that of copper, is transparent enough to transmit 98% of light, and maintains such properties even when bent or stretched. Due to these properties, graphene may be widely used in nanomaterials, inks, barrier materials, heat dissipation materials, ultralight materials, energy electrode materials, next-generation semiconductors, transparent electrodes, and the like.

However, in order to coat graphene using a solution process, graphene needs to be uniformly distributed in the coating layer so that the desired physical properties may be achieved.

### Summary of Invention

### Technical Problem

An aspect of the present disclosure is to provide a graphene-coated steel sheet having excellent formability and heat dissipation properties.

Another aspect of the present disclosure is to provide a graphene-coated steel sheet having excellent heat dissipation properties even when including another coating layer.

Still another aspect of the present disclosure is to provide a graphene-coated steel sheet having excellent heat dissipation properties even when used in combination with another pigment.

### Solution to Problem

According to an aspect of the present disclosure, a graphene-coated steel sheet includes: a plated steel sheet; and a graphene coating layer disposed on the plated steel sheet and containing graphene, wherein the graphene is contained in an amount of 0.1 to 30 wt% based on the total weight of the graphene coating layer, and an average area fraction of graphene particles distributed per unit area (0.1 mm X 0.1 mm) in the graphene coating layer is 10% or more.

The plated steel sheet may be at least one selected from the group consisting of a zinc-plated steel sheet, a zinc-based alloy-plated steel sheet, an aluminum-plated steel sheet, an aluminum-based alloy-plated steel sheet, a cold-rolled steel sheet, and a hot-rolled steel sheet.

The graphene coating layer may include a binder.

The binder may include two or more types of acrylic-based resins.

The two or more types of acrylic-based resins may be two or more selected from the group consisting of a copolymer of ethylene acrylic acid (EAA) and polyethylene (PE), a copolymer of ethylene acrylic acid (EAA) and polyurethane (PU), polymethyl methacrylate, polyacrylonitrile, cyclohexyl acrylate, glycidyl acrylate, and hydroxyalkyl acrylate.

The binder may further include at least one selected from the group consisting of an epoxy-based resin, a urethane-based resin, a fluorine-based resin, a polyester-based resin, a polyethylene-based resin, and a vinyl chloride-based resin.

The epoxy-based resin may be at least one selected from the group consisting of a bisphenol A-type resin, a bisphenol F-type resin, a novolac resin, an acrylic-modified epoxy resin, a cycloaliphatic resin, and a glycidyl amine-type resin.

The urethane-based resin may be at least one selected from the group consisting of polyurethane prepared from isophorone diisocyanate, adipic acid, and a polyhydric alcohol, acrylic polyol, and polyisocyanate.

The fluorine-based resin may be at least one selected from the group consisting of a fluorine-based urethane resin obtained using perfluoroalkyl alcohol, perfluorinated acrylic polyol, fluorinated polyolefin-based polyol, or a mixture thereof, polymethyl-α-fluoroacrylate, block poly-α-fluoroacrylate, polyethyl-α-fluoroacrylate, and polyfluoroalkyl acrylate.

The graphene coating layer may further include an additive.

The additive may be at least one selected from the group consisting of a titanium-based compound, an ammonium phosphate salt, a vanadium-based compound, an organophosphoric acid, an amine phosphate salt, an organic acid, a leveling agent, a wetting agent, a curing agent, and an antifoaming agent.

The graphene-coated steel sheet may satisfy the following Expression (1):

${C}_{G} ⋅ t \geq 0.71$ (Expression 1)
(in Expression (1), C_{G} is a content (wt%) of graphene in the graphene coating layer, and t is a thickness (µm) of the coating layer).

The graphene-coated steel sheet may satisfy the following Expression (2):

${{C}_{G}}^{1 / 6} ⋅ t \leq 32$ (Expression 2)
(in Expression (2), C_{G} is a content (wt%) of graphene in the graphene coating layer, and t is a thickness (µm) of the coating layer).

A thickness of the graphene coating layer may be 0.1 to 30 µm.

### Advantageous Effects of Invention

According to an aspect of the present disclosure, a graphene-coated steel sheet having excellent formability and heat dissipation properties may be provided.

According to another aspect of the present disclosure, a graphene-coated steel sheet having excellent heat dissipation properties even when including another coating layer may be provided.

According to still another aspect of the present disclosure, a graphene-coated steel sheet having excellent heat dissipation properties even when used in combination with another pigment may be provided.

### Best Mode for Invention

Hereinafter, preferred embodiments in the present disclosure will be described. However, the embodiments in the present disclosure may be modified in various other forms, and the scope of the present disclosure is not limited to the embodiments described below.

In addition, the embodiments in the present disclosure are provided to more fully describe the present disclosure to those skilled in the art.

In the drawings, shapes, sizes, and the like of elements may be exaggerated for clearer description.

In describing embodiments in the present disclosure, when it is determined that a detailed description of known technology related to the present disclosure may unnecessarily obscure the gist of the present disclosure, the detailed description will be omitted. In addition, the terms to be described below are terms defined in consideration of the functions of the present disclosure, and may vary depending on the intent or custom of a user or an operator. Accordingly, the definitions of such terms should be understood based on the contents throughout the present specification. Terms used in the detailed description are only for describing embodiments in the present disclosure and should never be construed as limiting. Unless clearly indicated otherwise, expressions in the singular form include the plural form.

In the present description, expressions such as "comprise" and "include" are intended to refer to certain features, numbers, steps, operations, elements, parts thereof, or combinations thereof, and should not be construed as excluding the presence or possibility of one or more other features, numbers, steps, operations, elements, parts thereof, or combinations thereof in addition to those described.

Unless otherwise specifically defined in the specification of the present disclosure, a unit of % means to wt%.

In addition, throughout the specification, when a part is described as being "connected" to another part, this includes not only a case in which the part is "directly connected" to the other part, but also a case in which the part is "indirectly connected" to the other part with another element interposed therebetween.

Hereinafter, the present disclosure will be described in detail with reference to each embodiment or example of the present disclosure. It should be noted that each embodiment or example described in the present specification is not limited to description only for one embodiment or example, and may also be combined with other embodiments or examples. Accordingly, references to claims in the claims are merely examples of an embodiment, and the technical idea of the present disclosure should not be construed as being limited only to combinations with the cited claims, and combinations with various claims are also included within the scope of the technical idea of the present disclosure.

The terms used in the present disclosure are for explaining the present disclosure and are not intended to limit the present disclosure. In addition, singular forms used in the present disclosure include plural forms, unless the context clearly indicates otherwise.

The meaning of "comprising" used in the present disclosure is to specify the configuration and does not exclude the presence or addition of other configurations.

Unless otherwise defined, all terms including technical terms and scientific terms used in the present disclosure have the same meanings as those commonly understood by those skilled in the art to which the present disclosure pertains. Previously defined terms are to be interpreted as having meanings consistent with the relevant technical literature and the disclosure herein.

Hereinafter, a graphene-coated steel sheet according to an embodiment in the present disclosure will be described in detail.

As a result of experiments conducted while varying the graphene concentration in the coating layer and the coating thickness, the inventors of the present disclosure confirmed that heat dissipation properties have a certain correlation with the graphene area fraction, and found that the graphene area fraction is determined by the graphene concentration in the coating layer and the coating thickness.

Accordingly, a graphene-coated steel sheet according to an embodiment in the present disclosure may include: a plated steel sheet; and a graphene coating layer disposed on the plated steel sheet and containing graphene, wherein the graphene is contained in an amount of 0.1 to 30 wt% based on the total weight of the graphene coating layer, and an average area fraction of graphene particles distributed per unit area in the graphene coating layer may be 10% or more.

In the present specification, the average area fraction of distributed graphene was defined as an area fraction occupied by graphene in the total image area, as determined from images measured at a magnification of X500 to X1,000 using an optical microscope and analyzed using an image analyzer. In addition, the average area fraction of distributed graphene was based on an average value obtained by measuring five images.

In the present disclosure, the type of the plated steel sheet is not particularly limited, but may be, for example, a zinc-plated steel sheet, a zinc-based alloy-plated steel sheet, an aluminum-plated steel sheet, an aluminum-based alloy-plated steel sheet, a cold-rolled steel sheet, or a hot-rolled steel sheet.

A thickness of the graphene coating layer is not particularly limited, but may be, for example, 0.1 to 30 µm. When the thickness of the coating layer is less than 0.1 µm, the surface treatment solution composition is applied in a thin layer to peak portions of roughness present on the surface of the plated steel sheet, thereby causing a problem in that corrosion resistance is reduced. On the other hand, when the thickness exceeds 30 µm, a thick coating layer is formed, resulting in deteriorated workability and increased solution treatment costs, which is economically disadvantageous.

Here, the thickness refers to a thickness after drying.

Accordingly, a graphene-coated steel sheet in an embodiment may include a graphene coating layer disposed on the plated steel sheet and containing graphene. The plated steel sheet on which the graphene coating layer is disposed may have excellent corrosion resistance, workability, adhesion, and heat dissipation properties.

The graphene coating layer may have an average area fraction of graphene particles distributed per unit area (0.1 mm × 0.1 mm) of the graphene coating layer of 10% or more, specifically 20% or more, more specifically 30% or more, still more specifically 40% or more, and even more specifically 50% or more. When the average area fraction of the distributed graphene particles is less than 10%, the content of graphene in the graphene coating layer is low, and thus heat dissipation properties may be poor.

The type of the graphene particles is not particularly limited.

The graphene may be contained in an amount of 0.1 to 30 wt%, specifically 0.1 to 10 wt%, and more specifically 0.1 to 20 wt%, based on the total weight of the graphene coating layer. When the graphene is contained in an amount of less than 0.1 wt% based on the total weight of the graphene coating layer, heat dissipation properties may be poor, and when the content of the graphene exceeds 30 wt%, dispersion stability may be poor.

The size of the graphene particles may refer to a lateral size of graphene, and the size thereof is not particularly limited, but may be, for example, 1 to 5 µm.

The graphene coating layer may include a binder. The binder may improve dispersion stability of graphene and may provide excellent elongation and workability when coating a steel sheet.

The binder may include two or more types of acrylic-based resins. A solution composition containing the binder may have excellent dispersion stability with graphene, and may have excellent elongation and workability when coating a steel sheet.

The two or more types of acrylic-based resins may be two or more selected from the group consisting of a copolymer of ethylene acrylic acid (EAA) and polyethylene (PE), a copolymer of ethylene acrylic acid (EAA) and polyurethane (PU), polymethyl methacrylate, polyacrylonitrile, cyclohexyl acrylate, glycidyl acrylate, and hydroxyalkyl acrylate, and specifically, may be a copolymer of ethylene acrylic acid (EAA) and polyethylene (PE) and a copolymer of ethylene acrylic acid (EAA) and polyurethane (PU).

When the binder of the graphene coating layer includes two types of acrylic-based resins, a content ratio of the respective resins may be 1:1 to 1:6, and specifically may be 1:3 to 1:5. When the binder includes the two types of acrylic-based resins at the above content ratio, corrosion resistance, workability, and coating adhesion may be improved, and physical properties of the coating layer may be improved as compared with a case in which one type of acrylic-based resin is included.

The binder is not particularly limited, but may further include, for example, at least one selected from the group consisting of an epoxy-based resin, a urethane-based resin, a fluorine-based resin, a polyester-based resin, a polyethylene-based resin, and a vinyl chloride-based resin.

The epoxy-based resin may be at least one selected from the group consisting of a bisphenol A-type resin, a bisphenol F-type resin, a novolac resin, an acrylic-modified epoxy resin, a cycloaliphatic resin, and a glycidyl amine-type resin.

The urethane-based resin may be at least one selected from the group consisting of polyurethane prepared from isophorone diisocyanate, adipic acid, and a polyhydric alcohol, acrylic polyol, and polyisocyanate.

The fluorine-based resin may be at least one selected from the group consisting of a fluorine-based urethane resin obtained using perfluoroalkyl alcohol, perfluorinated acrylic polyol, fluorinated polyolefin-based polyol, or a mixture thereof, polymethyl-α-fluoroacrylate, block poly-α-fluoroacrylate, polyethyl-α-fluoroacrylate, and polyfluoroalkyl acrylate.

The graphene coating layer may include a binder in an amount of 55 to 90 wt%, and specifically 60 to 90 wt%. When the content of the binder is less than 55 wt%, corrosion resistance, workability, and coating adhesion may be poor, and dispersion stability of graphene may be poor, and when the content of the binder exceeds 90 wt%, heat dissipation properties may be poor.

The graphene coating layer is not particularly limited, but may further include, for example, an additive.

Among the additives, a physical property improver may improve adhesion between the steel sheet and the coating layer, and may improve corrosion resistance. The physical property improver may be at least one selected from the group consisting of a titanium-based compound, an ammonium phosphate salt, a vanadium-based compound, an organophosphoric acid, an amine phosphate salt, and an organic acid, and specifically, may be at least one selected from the group consisting of a titanium-based compound and an ammonium phosphate salt.

The graphene coating layer may include the physical property improver among the additives in an amount of 5 to 40 wt%. When the content of the physical property improver in the graphene-coated steel sheet is less than 5 wt%, physical properties of the coated steel sheet may deteriorate, and when the content exceeds 40 wt%, corrosion resistance, adhesion, workability, and the like may deteriorate.

The additive may be at least one selected from the group consisting of a leveling agent, a wetting agent, a curing agent, and an antifoaming agent.

The leveling agent may be at least one selected from the group consisting of silicone-modified polyacrylate, polyacrylate, fluorine-modified polyacrylate, and polysiloxane.

The wetting agent serves to allow the graphene-coated steel sheet to be well attached to a steel sheet, and may be at least one selected from the group consisting of a polyether-modified polyalkylsiloxane-based surfactant, an aralkyl-modified polyalkylsiloxane-based surfactant, a polyether-modified siloxane-based surfactant, a polymer-type fluorine-based surfactant, and an alcohol alkoxylate (non-silicone-based).

The curing agent serves to allow the graphene-coated steel sheet to be coated and dried to form a dried coating film, and may be at least one selected from the group consisting of an amine-based compound, an amide-based compound, a silane coupling agent, a carbodilite-based compound, an isocyanate-based compound, an aziridine-based compound, an epoxy-based compound, and a crosslinker.

The antifoaming agent serves to reduce bubble generation during stirring and roll coating for forming the graphene-coated steel sheet, and may be at least one selected from the group consisting of a silicone-based antifoaming agent, a mineral oil-based antifoaming agent, and a polymer-based antifoaming agent (free of silicone and mineral oil).

The graphene coating layer is not particularly limited, but may include, for example, an additive in an amount of 1 to 5 wt%.

A composition for a graphene-coated steel sheet according to an embodiment may further contain a solvent as the balance. The solvent may be at least one selected from the group consisting of water, 1-ethyl-2-pyrrolidinone (NEP), and dimethyl sulfoxide (DMSO).

The graphene-coated steel sheet may satisfy the following Expression (1). [Expression (1)] ${C}_{G} ⋅ t \geq 0 71$

(In Expression (1), C_{G} is a content (wt%) of graphene in the graphene coating layer, and t is a thickness (µm) of the coating layer.)

In Expression (1), when the C_{G}·t value is less than 0.71, the heat dissipation performance of the graphene-coated steel sheet may be poor.

In addition, the graphene-coated steel sheet may satisfy the following Expression (2). [Expression (2)] ${{C}_{G}}^{1 / 6} ⋅ t \leq 32$

(In Expression (2), C_{G} is a content (wt%) of graphene in the graphene coating layer, and t is a thickness (µm) of the coating layer.)

The graphene steel sheet coating layer satisfying the condition of Expression (2) may have excellent dispersion stability, and thus may have excellent formability. On the other hand, in Expression (2), when the C_{G}^{1/6}·t value exceeds 32, dispersion stability of graphene may be poor, and cracks may occur.

According to an embodiment in the present disclosure, even when a coating layer other than the graphene coating layer is further included, heat dissipation properties may still be excellent.

In addition, according to an embodiment in the present disclosure, even when another material such as a pigment is further included in the graphene coating layer, heat dissipation properties may still be excellent.

Furthermore, a method for manufacturing a graphene-coated steel sheet according to another embodiment in the present disclosure will be described.

More specifically, the method may include providing a plated steel sheet including a plating layer formed on at least one surface thereof; coating the plating layer with the above-described solution composition; and drying the coated steel sheet.

The solution composition may be prepared by adding graphene, a binder, a physical property improver, and an additive to a solvent in respective amounts, and then stirring the mixture.

In applying the composition of the present disclosure in a solution state to the steel sheet, a commonly used coating method may be applied, and thus the coating method is not particularly limited.

For example, a coating process may be performed by selecting one of bar coating, roll coating, spraying, dipping, spray squeezing, and dip squeezing, but the method is not particularly limited thereto.

A process of drying the steel sheet coated with the composition may be performed in a temperature range of 40 to 280°C based on a peak metal temperature (PMT) of a material (steel sheet).

When the peak metal temperature of the material is lower than 40°C, formation of a robust coating structure may be insufficient, and thus corrosion resistance and blackening resistance may be poor. On the other hand, when the temperature exceeds 280°C, hardness of the coating film may excessively increase, and thus corrosion resistance of formed portions may be poor, and surface quality may be poor due to yellowing caused by excessive heat.

The steel sheet after completion of the drying treatment may include a coating layer having a thickness of 0.1 to 30 µm after drying.

In the present disclosure, means for performing the drying treatment are not particularly limited, but it should be noted that equipment such as an induction oven or a hot-air drying furnace may be used, and conditions for such equipment may be conventional.

### Mode for Invention

### Examples

Hereinafter, the present disclosure will be described in more detail with reference to examples. However, the descriptions of these examples are merely for illustrating the practice of the present disclosure, and the present disclosure is not limited by the descriptions of these examples. This is because the scope of the present disclosure is determined by the matters recited in the claims and matters reasonably inferred therefrom.

### 1. Experimental Example 1 (heat dissipation performance test)

### (1) Manufacture of graphene-coated steel sheet

Graphene coating solutions were prepared by stirring graphene in the amounts shown in Table 1 together with a binder and an additive. In each of the graphene coating solutions, excluding graphene, the binder and additive were added at a weight ratio of 8:2.

The prepared graphene coating solutions were applied onto and dried on hot-dip plated steel sheets of 0.5 to 2.0 t to manufacture graphene-coated steel sheets having the coating thicknesses shown in Table 1.

As the binder, a mixture of two resins was used at a weight ratio of 4:1: a solvent-free type ethylene acrylic acid (EAA)-polyethylene (PE) copolymer resin containing about 2 wt% trimethoxysilane (TMOS) in side chains; and a solvent-free type EAA-PU copolymer resin.

Titanium diethylene glycol propylene glycol triethanolamine complexes were used as the additive.

### (2) Heat dissipation test

In an environment maintained at an ambient temperature of 23 to 25°C, a hole was formed in an upper portion of a heat-insulating box having a built-in heat source, and a coated specimen having a size of 200 mm × 200 mm was placed over the hole. After the specimen was seated in place, the periphery of the specimen was sealed again.

Power was applied to the specimen and maintained for 2 hours or longer, and temperature changes were measured until the temperatures of the steel sheet and the inside of the heat-insulating box were maintained constant. When the temperatures were maintained constant, the temperature difference between the inside and outside of the box was measured. The results are shown in Table 1.

In addition, with the equilibrium temperature difference of Comparative Example 1 defined as T1 and the equilibrium temperature difference of each coated steel sheet defined as T2, the value calculated by (T1-T2)/T1 x 100% was taken as the heat dissipation effect. The results are shown in Table 1.

### (3) Measurement of graphene area

Images measured at a magnification of 500× using an optical microscope were captured 10 times, and the average value of the ratio of the area occupied by graphene to the total image area was measured using an image analyzer. The results are shown in Table 1.

In addition, values measured according to the following Expression (1) are shown in Table 1. [Expression (1)] ${C}_{G} ⋅ t \geq 0 71$

(In Expression (1), C_{G} is a content (wt%) of graphene in the graphene coating layer, and t is a thickness (µm) of the coating layer.)

**[Table 1]**

| | Graphene (wt%) | Coating layer thickness (µm) | Graphene area fraction (%) | C_{G}·t | Heat dissipation temperature difference (°C) | Heat dissipation effect (%) |
|---|---|---|---|---|---|---|
| Comparative Example 1 | 0 | 0.95 | 0 | 0 | 40.1 | 0 |
| Comparative Example 2 | 0.2 | 0.48 | 1 | 0.096 | 40.06 | 0.1 |
| Comparative Example 3 | 0.2 | 1.01 | 3 | 0.202 | 40.02 | 0.21 |
| Comparative Example 4 | 0.2 | 1.97 | 6 | 0.394 | 39.92 | 0.25 |
| Example 1 | 0.2 | 3.55 | 10 | 0.71 | 39.62 | 0.46 |
| Example 2 | 0.2 | 8.16 | 19 | 1.632 | 39.22 | 0.59 |
| Example 3 | 0.2 | 10.43 | 27 | 2.086 | 38.94 | 0.5 |
| Example 4 | 0.2 | 14.65 | 35 | 2.93 | 38.07 | 1.2 |
| Comparative Example 5 | 0.5 | 0.5 | 3 | 0.25 | 40 | 1.36 |
| Comparative Example 6 | 0.5 | 1.03 | 7 | 0.515 | 39.9 | 1.15 |
| Example 5 | 0.5 | 2.06 | 15 | 1.03 | 39.64 | 1.18 |
| Example 6 | 0.5 | 4.04 | 23 | 2.02 | 38.8 | 2.19 |
| Example 7 | 0.5 | 8.28 | 44 | 4.14 | 37.03 | 3.26 |
| Example 8 | 0.5 | 10.3 | 56 | 5.15 | 36.35 | 3.12 |
| Example 9 | 0.5 | 14.87 | 72 | 7.435 | 34.78 | 3.24 |
| Comparative Example 7 | 1 | 0.51 | 7 | 0.51 | 39.86 | 2.89 |
| Example 10 | 1 | 1.04 | 14 | 1.04 | 39.63 | 4.15 |
| Example 11 | 1 | 1.94 | 26 | 1.94 | 38.79 | 5.06 |
| Example 12 | 1 | 4.17 | 46 | 4.17 | 37.11 | 7.3 |
| Example 13 | 1 | 8.34 | 63 | 8.34 | 33.94 | 7.66 |
| Example 14 | 1 | 10.42 | 78 | 10.42 | 32.68 | 7.45 |
| Example 15 | 1 | 14.91 | 90 | 14.91 | 32.84 | 10.9 |
| Example 16 | 2 | 0.5 | 13 | 1 | 39.55 | 9.35 |
| Example 17 | 2 | 0.99 | 26 | 1.98 | 38.85 | 9.62 |
| Example 18 | 2 | 2.05 | 45 | 4.1 | 37.17 | 13.26 |
| Example 19 | 2 | 4.18 | 74 | 8.36 | 33.41 | 15.35 |
| Example 20 | 2 | 7.71 | 97 | 15.42 | 31.89 | 16.68 |
| Example 21 | 2 | 10 | 92 | 20 | 32.47 | 15.89 |
| Example 22 | 2 | 14.55 | 99 | 29.1 | 31.45 | 16.16 |
| Example 23 | 5 | 0.5 | 28 | 2.5 | 38.44 | 18.5 |
| Example 24 | 5 | 1.03 | 56 | 5.15 | 36.24 | 18.1 |
| Example 25 | 5 | 1.94 | 77 | 9.7 | 33.73 | 20.48 |
| Example 26 | 5 | 4.19 | 98 | 20.95 | 32.23 | 19.02 |
| Example 27 | 5 | 7.72 | 96 | 38.6 | 31.99 | 19.87 |
| Example 28 | 5 | 10 | 97 | 50 | 31.47 | 19.63 |
| Example 29 | 5 | 14.43 | 99 | 72.15 | 31.57 | 21.56 |
| Example 30 | 10 | 0.49 | 54 | 4.9 | 35.73 | 20.22 |
| Example 31 | 10 | 0.98 | 70 | 9.8 | 33.62 | 19.42 |
| Example 32 | 10 | 2.02 | 99 | 20.2 | 32.13 | 21.53 |
| Example 33 | 10 | 3.88 | 94 | 38.8 | 32.31 | 21.26 |
| Example 34 | 10 | 7.71 | 98 | 77.1 | 31.9 | 20.44 |
| Example 35 | 10 | 9.52 | 97 | 95.2 | 31.86 | 20.54 |
| Example 36 | 10 | 14.99 | 99 | 149.9 | 32.04 | 20.09 |

Referring to Table 1, it was confirmed that the steel sheets of Examples 1 to 36, in which the graphene area fraction was 10% or more, had a heat dissipation effect.

However, it was confirmed that the heat dissipation effect was insignificant in Comparative Examples 1 to 7, in which the graphene area fraction was less than 10%.

### 2. Experimental Example 2 (heat dissipation performance test on plated steel sheet including multilayer coating layer)

### (1) Manufacture of graphene-coated steel sheet including multilayer coating layer

A graphene coating solution was prepared by mixing 2 wt% of graphene and 98 wt% of the binder and additive used in Experimental Example 1 at a weight ratio of 8:2, based on 100 wt% of solid content.

A topcoat coating solution containing no graphene was prepared by mixing a polyester resin and a melamine-based curing agent at a weight ratio of 1:1 so that the solid content was about 35 wt%.

A primer coating solution containing no graphene was prepared by mixing a silane coupling agent and an ammonium phosphate salt at a weight ratio of 1:1 so that the solid content was about 5 wt%.

The primer coating solution, the graphene coating solution, and the topcoat coating solution were sequentially applied onto hot-dip plated steel sheets having a thickness of 0.5 to 2.0 t and dried, thereby preparing graphene-coated steel sheets in which the thickness of the graphene coating layer was 5 µm and the thicknesses of the topcoat layer and the primer layer were as shown in Table 2.

### (2) Heat dissipation test

The heat dissipation effect of each of the graphene-coated steel sheets was measured in the same manner as in the heat dissipation test of Experimental Example 1. The results are shown in Table 2.

**[Table 2]**

| | Primer coat thickness (µm) | Topcoat thickness (µm) | Graphene area fraction (%) | C_{G}·t | Heat dissipation properties | |
|---|---|---|---|---|---|---|
| | | | | | Equilibrium temperature difference (°C) | Heat dissipation effect (%) |
| Example 37 | 0.5 | - | 78 | 10 | 33.61 | 16.20 |
| Example 38 | 1 | - | 76 | 10 | 33.52 | 16.42 |
| Example 39 | 2 | - | 76 | 10 | 33.34 | 16.87 |
| Example 40 | 5 | - | 78 | 10 | 33.63 | 16.12 |
| Example 41 | - | 0.5 | 80 | 10 | 33.50 | 16.14 |
| Example 42 | - | 1 | 77 | 10 | 34.50 | 16.73 |
| Example 43 | - | 2 | 74 | 10 | 35.98 | 17.90 |
| Example 44 | - | 5 | 79 | 10 | 39.71 | 17.73 |

Referring to Examples 37 to 44, it was confirmed that, in plated steel sheets including the graphene coating layer, the heat dissipation effect was substantially the same even when a coating layer containing no graphene was included above or below the graphene coating layer.

### 3. Experimental Example 3 (heat dissipation performance test on plated steel sheet including coating layer containing pigment)

### (1) Manufacture of graphene-coated steel sheet including multilayer coating layer

According to Table 3, a graphene coating solution was prepared by mixing an inorganic pigment containing titanium dioxide and carbon black at a weight ratio of 1:1, graphene, the binder of Experimental Example 1, and the additive of Experimental Example 1. The binder and additive were added at a weight ratio of 8:2 based on the content excluding the inorganic pigment and graphene in the graphene coating solution.

Using the prepared graphene coating solution, graphene-coated steel sheets were manufactured in the same manner as in Experimental Example 1.

### (2) Heat dissipation test

The heat dissipation effect of each of the graphene-coated steel sheets was measured in the same manner as in the heat dissipation test of Experimental Example 1. The results are shown in Table 3.

**[Table 3]**

| | Inorganic pigment (wt%) | Graphene (wt%) | Coating layer thickness (µm) | Heat dissipation properties | |
|---|---|---|---|---|---|
| | | | | Equilibrium temperature difference (°C) | Heat dissipation effect (%) |
| Comparative Example 8 | 1 | 0 | 2.11 | 40.17 | -0.18 |
| Comparative Example 9 | 2 | 0 | 2.10 | 40.20 | -0.24 |
| Comparative Example 10 | 5 | 0 | 1.98 | 40.02 | 0.19 |
| Comparative Example 11 | 10 | 0 | 1.84 | 40.04 | 0.14 |
| Example 45 | 1 | 2 | 2.16 | 36.39 | 9.25 |
| Example 46 | 2 | 2 | 2.09 | 37.28 | 7.03 |
| Example 47 | 5 | 2 | 1.89 | 36.81 | 8.20 |
| Example 48 | 10 | 2 | 1.99 | 37.40 | 6.74 |

Referring to Table 3, it was confirmed that the graphene-coated steel sheet containing a pigment had excellent heat dissipation properties and was not significantly affected by the content of the pigment. On the other hand, it was confirmed that, even when containing a pigment, the plated steel sheet containing no graphene had poor heat dissipation properties.

## Claims

1. A graphene-coated steel sheet comprising:
a plated steel sheet; and
a graphene coating layer disposed on the plated steel sheet and containing graphene,
wherein the graphene is contained in an amount of 0.1 to 30 wt% based on the total weight of the graphene coating layer, and
an average area fraction of graphene particles distributed per unit area (0.1 mm X 0.1 mm) in the graphene coating layer is 10% or more.

2. The graphene-coated steel sheet of claim 1, wherein the plated steel sheet is at least one selected from the group consisting of a zinc-plated steel sheet, a zinc-based alloy-plated steel sheet, an aluminum-plated steel sheet, an aluminum-based alloy-plated steel sheet, a cold-rolled steel sheet, and a hot-rolled steel sheet.

3. The graphene-coated steel sheet of claim 1, wherein the graphene coating layer comprises a binder.

4. The graphene-coated steel sheet of claim 3, wherein the binder comprises two or more types of acrylic-based resins.

5. The graphene-coated steel sheet of claim 3, wherein the two or more types of acrylic-based resins are two or more selected from the group consisting of a copolymer of ethylene acrylic acid (EAA) and polyethylene (PE), a copolymer of ethylene acrylic acid (EAA) and polyurethane (PU), polymethyl methacrylate, polyacrylonitrile, cyclohexyl acrylate, glycidyl acrylate, and hydroxyalkyl acrylate.

6. The graphene-coated steel sheet of claim 4, wherein the binder further includes at least one selected from the group consisting of an epoxy-based resin, a urethane-based resin, a fluorine-based resin, a polyester-based resin, a polyethylene-based resin, and a vinyl chloride-based resin.

7. The graphene-coated steel sheet of claim 6, wherein the epoxy-based resin is at least one selected from the group consisting of a bisphenol A-type resin, a bisphenol F-type resin, a novolac resin, an acrylic-modified epoxy resin, a cycloaliphatic resin, and a glycidyl amine-type resin.

8. The graphene-coated steel sheet of claim 6, wherein the urethane-based resin is at least one selected from the group consisting of polyurethane prepared from isophorone diisocyanate, adipic acid, and a polyhydric alcohol, acrylic polyol, and polyisocyanate.

9. The graphene-coated steel sheet of claim 6, wherein the fluorine-based resin is at least one selected from the group consisting of a fluorine-based urethane resin obtained using perfluoroalkyl alcohol, perfluorinated acrylic polyol, fluorinated polyolefin-based polyol, or a mixture thereof, polymethyl-α-fluoroacrylate, block poly-α-fluoroacrylate, polyethyl-α-fluoroacrylate, and polyfluoroalkyl acrylate.

10. The graphene-coated steel sheet of claim 1, wherein the graphene coating layer further comprises an additive.

11. The graphene-coated steel sheet of claim 10, wherein the additive is at least one selected from the group consisting of a titanium-based compound, an ammonium phosphate salt, a vanadium-based compound, an organophosphoric acid, an amine phosphate salt, an organic acid, a leveling agent, a wetting agent, a curing agent, and an antifoaming agent.

12. The graphene-coated steel sheet of claim 1, wherein the graphene-coated steel sheet satisfies the following Expression (1): [Expression (1)] ${C}_{G} ⋅ t \geq 0.71$ where C_{G} is a content (wt%) of graphene in the graphene coating layer, and t is a thickness (µm) of the coating layer.

13. The graphene-coated steel sheet of claim 1, wherein the graphene-coated steel sheet satisfies the following Expression (2): [Expression (2)] ${{C}_{G}}^{1 / 6} ⋅ t \leq 32$ in Expression (2), C_{G} is a content (wt%) of graphene in the graphene coating layer, and t is a thickness (µm) of the coating layer.

14. The graphene-coated steel sheet of claim 1, wherein a thickness of the graphene coating layer is 0.1 to 30 µm.
